**Europäisches Patentamt**

**European Patent Office**

**Office européen des brevets**

(19)

(11) Veröffentlichungsnummer : **0 164 582**
**B1**

(12)

# EUROPÄISCHE PATENTSCHRIFT

(45) Veröffentlichungstag der Patentschrift :
**11.01.89**

(51) Int. Cl.⁴ : **B 23 B 31/04**, B 23 B 31/30,
B 23 B 31/26

(21) Anmeldenummer : **85105756.2**

(22) Anmeldetag : **10.05.85**

(54) Spannelement zum zentrischen Spannen rotierender Teile.

(30) Priorität : **12.05.84 DE 3417641**

(43) Veröffentlichungstag der Anmeldung :
**18.12.85 Patentblatt 85/51**

(45) Bekanntmachung des Hinweises auf die Patenterteilung : **11.01.89 Patentblatt 89/02**

(84) Benannte Vertragsstaaten :
**AT CH DE FR GB LI SE**

(56) Entgegenhaltungen :
**DE–B– 2 045 235**
**FR–A– 908 573**
**FR–A– 1 180 135**
**GB–A– 833 048**
**GB–A– 2 013 539**
**US–A– 2 501 421**
**US–A– 2 812 672**
**US–A– 2 869 879**
**US–A– 3 000 240**
**US–A– 3 613 192**
**US–A– 4 154 555**

(73) Patentinhaber : **König, Manfred**
**Bestenheiderhöhenweg 11**
**D-6980 Wertheim (DE)**

(72) Erfinder : **König, Manfred**
**Bestenheiderhöhenweg 11**
**D-6980 Wertheim (DE)**

(74) Vertreter : **Patentanwälte Dr. Solf & Zapf**
**Schlossbleiche 20 Postfach 13 01 13**
**D-5600 Wuppertal 1 (DE)**

## Beschreibung

Die Erfindung betrifft ein Spannelement zum zentrischen Spannen rotierender Teile, wie Werkstücke oder Werkzeuge, mit einer Exzenter-Einrichtung zum justierbaren Ausgleich eines Achsversatzes zwischen einer Rotationsachse des Spannelementes und der Achse des eingespannten Teiles, bestehend aus einem Grundschaft mit einer zylindrischen Bohrung, in der ein Grundspannelement mit einer Aufnahmebohrung für das zu spannende Teil angeordnet ist, wobei zur Ausbildung der Exzenter-Einrichtung jeweils die Mittelachse des Grundschaftes sowie die Mittelachse des Grundspannelementes sowie die Mittelachse der darin befindlichen Aufnahmebohrung im Abstand zueinander parallel versetzt sind.

Ein derartiges Spannelement ist aus der FR-A-908 573 bekannt. Es ermöglicht einen Rundlaufausgleich, d. h. eine Zentrierung des gespannten Werkstückes oder Werkzeuges zum schlagfreien Lauf um seine Mittelachse auch in solchen Fällen, in denen das Spannelement selbst nicht absolut zentrisch z. B. in einer Werkzeugmaschinenspindel läuft und sich dadurch ein Achsversatz zwischen der Rotationsachse des Spannelementes und des eingespannten Teiles ergibt.

Bei dem bekannten Spannelement wird die beschriebene Exzentrizität dadurch erreicht, daß einerseits die zylindrische Bohrung des Grundschaftes exzentrisch in diesem sowie andererseits auch die Aufnahmebohrung exzentrisch in dem Grundspannelement ausgebildet sind. Die Herstellung von exzentrischen Bohrungen ist jedoch aufwendig und relativ teuer. Außerdem ist der Bereich des möglichen Achsversatz-Ausgleichs begrenzt durch die jeweilige Exzentrizität der einzelnen Bohrungen. Da ferner die Aufnahmebohrung des Grundspannelementes konisch ausgebildet ist, eignet sich das bekannte Spannelement nur zum Spannen solcher Teile, die einen entsprechenden Gegenkonus-Ansatz besitzen. Bei derartigen Konusverbindungen ist aber auch das übertragbare Drehmoment begrenzt.

Der Erfindung liegt die Aufgabe zugrunde, ein Spannelement der gattungsgemäßen Art zu schaffen, das preiswert in der Herstellung ist, das einen Exzentrizitäts-Ausgleich in einem weiten Bereich gestattet, und das sich zur Übertragung hoher Drehmomente auf das gespannte Teil eignet.

In einer ersten Ausführungsform der Erfindung wird dies dadurch erreicht, daß zum Spannen mit dem Grundspannelement eine innere und eine äußere hydraulische Spannbuchse vorgesehen sind, und daß die Exzenter-Einrichtung aus einer in der zur Mittelachse (Rotationsachse) des Grundschaftes zentrischen Bohrung des Grundschaftes angeordneten Exzenterbuchse besteht, deren Aufnahmebohrung exzentrisch zur Rotationsachse ist, sowie aus dem in der Aufnahmebohrung der Exzenterbuchse eingesetzten Grundspannelement, dessen zylindrisch ausgebildete Aufnahmebohrung mit ihrer Mittelachse exzentrisch zur Mittelachse der Aufnahmebohrung der Exzenterbuchse ausgebildet ist.

Bei einer zweiten Ausführungsform der Erfindung wird die Aufgabe dadurch gelöst, daß zum Spannen mit dem Grundspannelement eine innere und eine äußere hydraulische Spannbuchse vorgesehen sind, daß die Exzenter-Einrichtung aus einer in der zur Mittelachse des Grundschaftes zentrischen Bohrung angeordneten, äußeren Exzenterbuchse besteht, deren Aufnahmebohrung mit ihrer Mittelachse exzentrisch zur Mittelachse der Grundschaft-Bohrung verläuft, sowie aus einer in der Aufnahmebohrung der äußeren Exzenterbuchse geführten, inneren Exzenterbuchse, deren Aufnahmebohrung mit ihrer Mittelachse exzentrisch zur Mittelachse der Aufnahmebohrung der äußeren Exzenterbuchse verläuft, und daß das Grundspannelement in der Aufnahmebohrung der inneren Exzenterbuchse geführt ist und eine zu seinem Umfang zentrische, zylindrische Aufnahmebohrung aufweist.

Die hydraulischen, elastisch verformbaren Spannbuchsen ermöglichen bei Druckbeaufschlagung eines Hydraulikmediums ein gleichmäßig kreisförmiges Ausweiten und somit ein Spannen von zylindrischen Werkstücken bzw. Werkzeugen oder Bereichen hiervon. Die aus dem Hydrauliksystem resultierende große Spannkraft ermöglicht selbst bei relativ kleinen Spanndurchmessern ein absolut sicheres Spannen sowie die Übertragung hoher Drehmomente. Da eine Spannbuchse ein geschlossener, rotationssymmetrischer Körper ist, wird sie im elastischen Bereich gedehnt, wobei ein Spannhub in der Größenordnung von ca. 0,3 % des Spanndurchmessers erzielbar ist. Durch einen Spannkolben, der von Hand oder über eine Spanneinrichtung einer Maschine betätigt wird, wird das Hydraulikmedium unter Druck gesetzt.

Durch die erfindungsgemäße Ausgestaltung kann zumindest die Bohrung des Grundschaftes — in der zweiten Ausführungsform der Erfindung auch die Aufnahmebohrung des Grundspannelementes — zentrisch ausgebildet werden, wodurch die Fertigung dieser Teile vereinfacht wird.

Ferner kann durch den Einsatz unterschiedlicher Exzenterbuchsen nahezu jede beliebige Exzentrizität ausgeglichen werden.

Weitere vorteilhafte Ausgestaltungen des erfindungsgemäßen Spannelementes sind in den Unteransprüchen 3 bis 15 angegeben.

Die Erfindung wird in Zeichnungen in bevorzugten Ausführungsformen gezeigt, wobei aus den Zeichnungen weitere vorteilhafte Einzelheiten der Erfindung entnehmbar sind.

Es zeigen :

Fig. 1 ein Spannelement mit einer Einrichtung zum justierbaren Ausgleich eines Achsversatzes, eingesetzt in eine Spindel einer Werkzeugmaschine, im Schnitt,

Fig. 2 einen Schnitt durch das einen Teil des Spannelementes bildende Grundspannelement, entlang der Schnittebene II-II in Fig. 1,

Fig. 3 einen Schnitt durch das Grundspannelement, entlang einer Schnittebene III-III in Fig. 1,

Fig. 4 eine Ansicht eines Spannelementes,

Fig. 5 eine rein schematische und hinsichtlich der Exzentrizität vergrößerte Darstellung der miteinander zusammenwirkenden Teile des Spannelementes, im Schnitt, entlang einer Schnittebene V-V in Fig. 1,

Fig. 5a bis 5d schematische Darstellungen der miteinander zusammenwirkenden exzentrischen Teile des Spannelementes in verschiedenen Stellungen, ebenfalls im Schnitt.

Fig. 6 und 7 zeigen zwei Ausführungsformen des erfindungsgemäßen Spannelementes im Querschnitt.

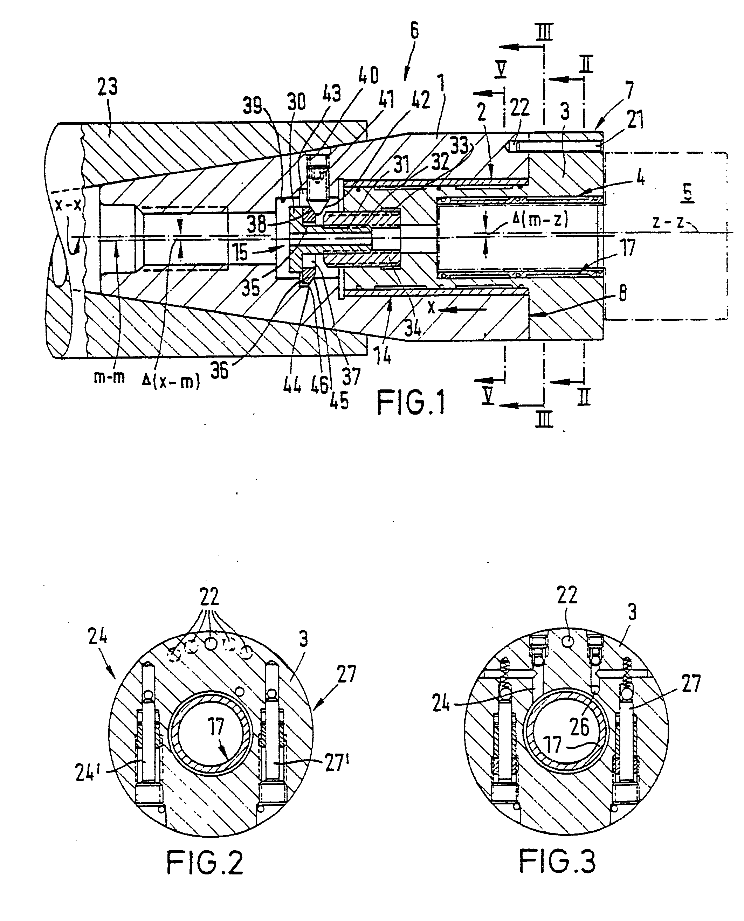

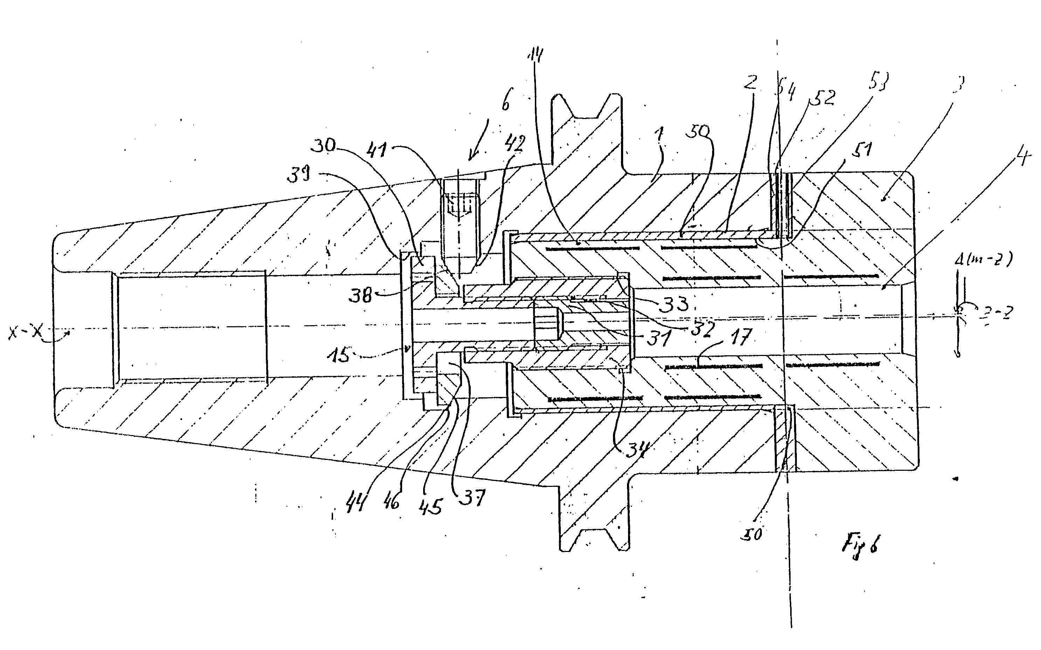

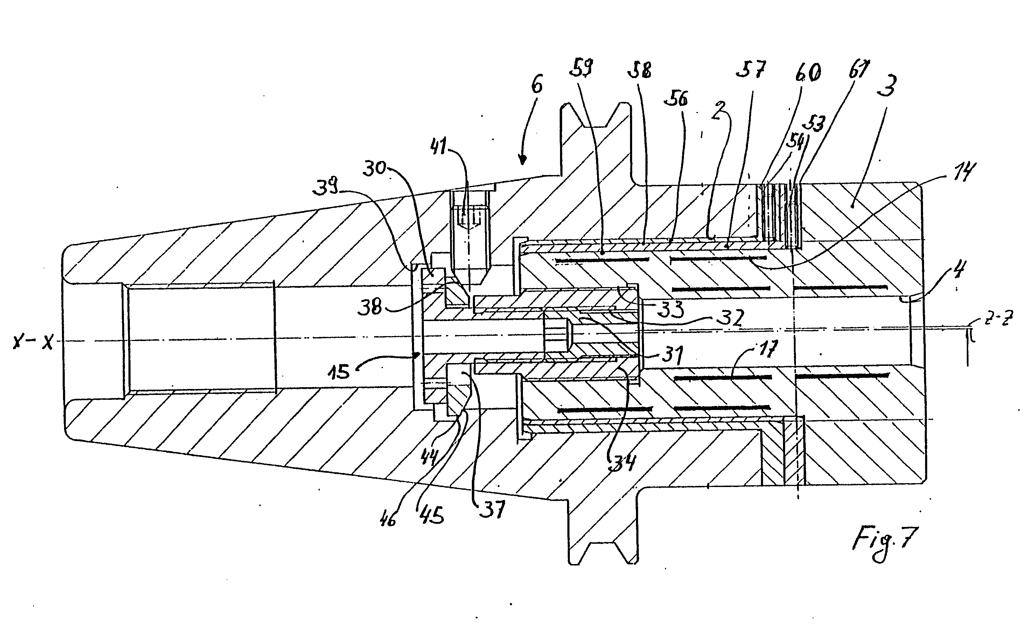

Die Figuren 1 bis 5 dienen ausschließlich zur Erläuterung, während die Erfindung nur in den Ausführungen nach Figuren 6 und 7 verwirklicht ist.

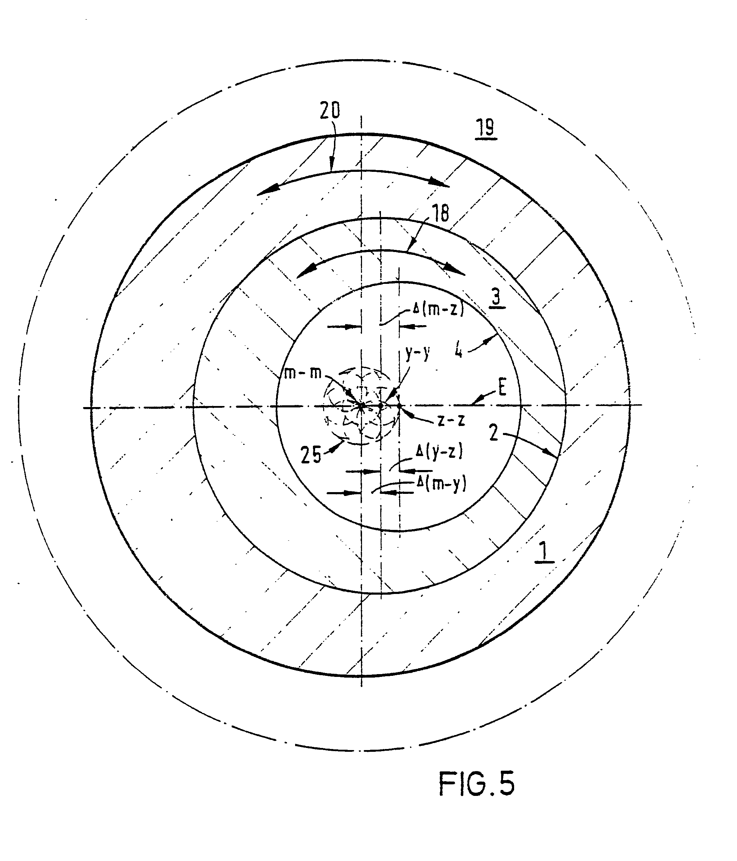

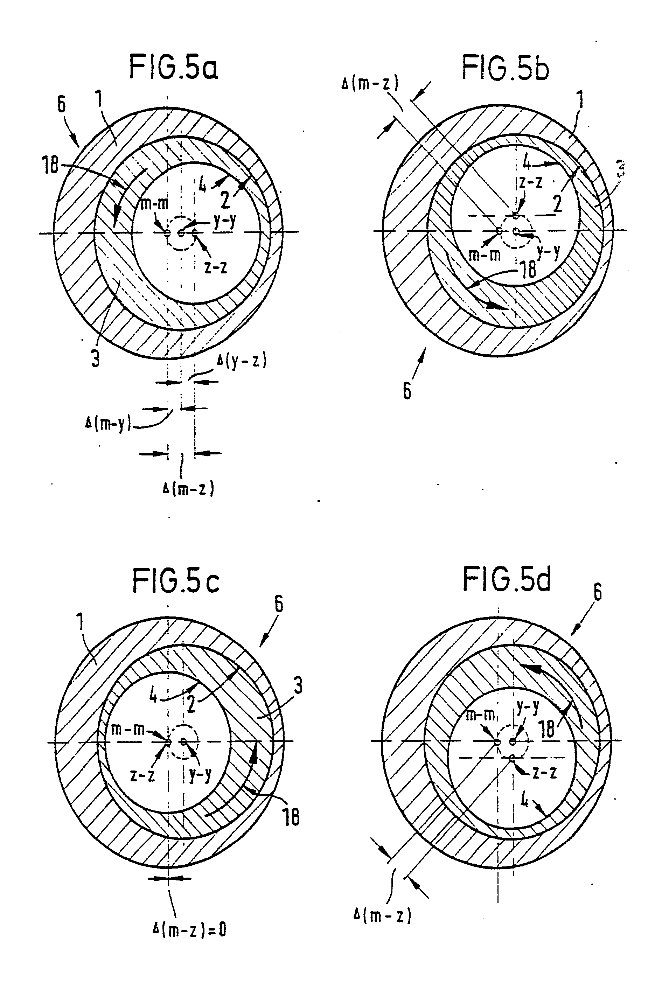

Das hydraulische Spannelement 6 gemäß Fig. 1 weist einen Grundschaft 1 mit einer zylindrischen Bohrung 2 auf. Der Grundschaft 1 ist ein exakt rotationssymmetrisch ausgebildeten Körper mit der Mittelachse m-m. Die zylindrische Bohrung 2 des Grundschaftes 1 ist gegenüber der Mittelachse m-m um den Betrag $\Delta$ (m-y) parallel versetzt (Fig. 5). In der zylindrischen Bohrung 2 ist ein Grundspannelement 3 eingepaßt, das seinerseits eine zylindrische Aufnahmebohrung 4 für das zu spannende Teil 5 aufweist. Das Grundspannelement 3 ist ein in sich rotationssymmetrischer Körper mit der Mittelachse y-y. Diese Mittelachse entspricht gleichzeitig der Mittelachse der zylindrischen Bohrung 2. Daher haben beide Mittelachsen, da sie identisch sind, die gleiche Bezeichnung. Die zylindrische Aufnahmebohrung 4 weist die Mittelachse z-z auf. Diese ist gegenüber der Mittelachse y-y des Grundspannelementes 3 um den Betrag $\Delta$ (y-z) parallel versetzt, wie dies aus den Prinzipdarstellungen der Fig. 5 bis 5d ersichtlich ist. Dadurch ergibt sich zwischen der Mittelachse m-m des Grundschaftes 1 und der Mittelachse z-z der Aufnahmebohrung 4 im Falle gleichgerichteter Exzentrizitätsstellung gemäß Fig. 5 bzw. 5a ein Gesamtbetrag des Achsversatzes zwischen dem Spannelement 6 und dem gespannten Teil 5 von $\Delta$(m-z). Damit ergibt sich der größte außermittige Differenzbetrag zwischen der Rotationsachse m-m des Spannelementes und des eingespannten Teiles 5 mit dessen Mittelachse z-z. Dadurch, daß die Beträge des Achsversatzes, nämlich $\Delta$(m-y) und $\Delta$(y-z) gleich sind, geht der Betrag von $\Delta$(m-z) bei Drehung des Grundspannelementes 3 in Richtung des Pfeiles 18 nach einer Drehung um 180°, entsprechend der in Fig. 5c gezeigten Stellung, gegen Null zurück. Denn in dieser Stellung fallen die Achsen m-m und z-z zusammen. In der praktischen Ausführung beträgt die in den Fig. 5 bis 5d rein schematisch vergrößert dargestellte Exzentrizität zwischen 0,1 und 0,01, vorzugsweise 0,05 mm.

In Fig. 1 bedeutet die Achse x-x die Rotationsachse des in die Spindel 19 eingesetzten Grundschaftes 1. Der Achsversatz $\Delta$(x-m) ergibt sich aus Ungenauigkeiten im Bereich der Werkzeugmaschine bzw. des Spannzuges und des zu spannenden Teiles. Es kann sich dabei entweder z. B. um radiale Formfehler, sog. Kreisformfehler oder Spannfehler handeln. Bei exakt rotationssymmetrischer Ausführung eines hydraulischen Spannelementes mit mittelachsengenauer Spannung des zu bearbeitenden Teiles 5 würde sich daher ein « Schlagen » zwischen der Mittelachse z-z des Teiles 5 und der Rotationsachse x-x ergeben und zwangsläufig zu einer Bearbeitungsungenauigkeit führen. Dabei würde beispielsweise eine einmal in ihrer Richtung umgespannte, beidseitig mit exakter Bearbeitung gefertigte Welle oder Spindel zwei exzentrisch gegeneinander versetzte Rundlaufteile aufweisen. Hierdurch würde Ausschuß produziert.

Dadurch, daß das Spannelement 6 eine Einrichtung zum Ausgleich von Achsversatz $\Delta$ (x-m) besitzt, wird dieser Fehler behoben. In Fig. 1 ist dargestellt, wie dieser Achsversatz durch einen Achsversatz $\Delta$(m-z) mit gleichem Exzentrizitätsbetrag ausgeglichen ist. Hierbei kommt es zum Zusammenfallen der Rotationsachse x-x und der Rotationsachse z-z des bearbeiteten Teiles 5.

Wie Fig. 1 weiter zeigt, ist das Grundspannelement 3 in der Aufnahmebohrung 2 des Grundschaftes 1 drehbar eingesetzt und nach Einstellen einer vorgesehenen Relativstellung durch einen Arretierungsstift 21, der in eine Arretierungsbohrung 22 des Grundschaftes 1 einrastet, gegen Verdrehung gesichert. Weiterhin besitzt das Grundspannelement 2 eine äußere Spannbuchse 14, mit der es kraftschlüssig durch das zugehörige Hydrauliksystem 27 in die Aufnahmebohrung 2 des Grundschaftes 1 einspannbar ist. Eine innere Spannbuchse 17 dient mit dem zugehörigen Hydrauliksystem 24 zum kraftschlüssigen Spannen des Teiles 5. Das Grundspannelement 3 ist weiterhin mit einem radialen Flansch 7 ausgebildet und liegt mit diesem an einer Stirnseite 8 des Grundschaftes 1 an. Im gezeigten Ausführungsbeispiel ist der Grundschaft 1 mit einem Steilkegel nach DIN 69871-A50 ausgebildet und mit diesem in einer konischen Bohrung der Spindel 23 aufgenommen.

Fig. 2 veranschaulicht in einem Schnitt entlang der Ebene II-II in Fig. 1 die beiden unabhängigen hydraulischen Drucksysteme 24 und 27. Erkennbar darin sind die hydraulischen Spannschrauben 24' und 27'. Auch sind die Arretierungsbohrungen 22 zu erkennen, wobei der Arretierungsstift 21 herausgezogen ist. Wie insbesondere aus der Schnittdarstellung in Fig. 3 entsprechend der Schnittebene III-III in Fig. 1 hervorgeht, ist das Hydrauliksystem 24 der inneren Spannbuchse 17 zugeordnet, während das Hydrauliksystem 27 durch den Verbindungskanal 26 die äußere Spannbuchse 14 beaufschlagt.

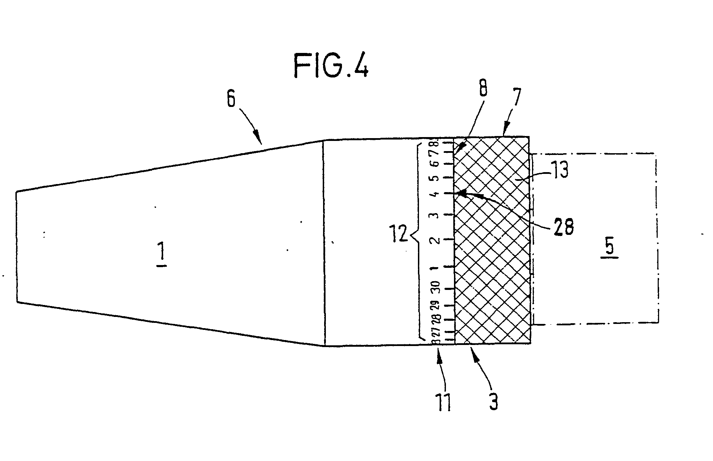

Fig. 4 zeigt in der Ansicht eine vorteilhafte Ausgestaltung des Spannelementes 6. Es handelt sich um eine Skala 12 in dem der Stirnseite 8 nächstgelegenen Zylindermantelbereich 11 des Grundschaftes 1. Der daran anliegende Flansch 7 des Grundspannelementes 3 ist in seinem äußeren Zylindermantelbereich 13 mit einer Kordelung, vorzugsweise einer Kordelung RGE 1 nach DIN 82 ausgebildet. Des weiteren ist eine Stellungsmarke 28 vorgesehen, welche die relative Stellung des Grundspannelementes 3 zum Grundschaft 1 an der Skala 12 abzulesen gestattet. Dabei entspricht bei der beispielhaft dargestellten 15-Grad-Teilung der Skale 12 jede Ziffer der Skala einem zugehörigen definierten Achsabstand $\Delta$(m-z). Entsprechend dieser Skala 12 kann demnach jeder vorgegebene Exzentrizitäts-Abstand der Achsen m-m und z-z eingestellt und diese Stellung mittels des Arretierungsstiftes 21 in einer der Arretierungsbohrungen 22 fixiert werden. Sodann muß das Werkzeug 5 entsprechend Pfeil 20 in Fig. 5 so gedreht werden, daß die Achsen m-m und z-z zusammenfallen. Die Drehrichtung kann durch ein präzises, vorzugsweise optisches Meßinstrument ermittelt werden. Durch dieses Verdrehen des Werkzeuges kann, wie in Fig. 5 dargestellt, jede Rundlauf-Ungenauigkeit durch Achsversatz innerhalb des durch gestrichelte Kreise besetzten Feldes 25 ausgeglichen werden.

Weiterhin ist eine Axial-Anzugsvorrichtung vorgesehen, um einerseits das Grundspannelement 3 in dem Grundschaft 1 zu arretieren und andererseits mit seinem Flansch 7 gegen die Stirnseite 8 in Anlage zu bringen. Diese Axial-Anzugsvorrichtung besteht aus einem Anschlag 15, der von einer Tellerschraube 16 mit tellerförmigem Kopf 30 und einem Schraubenschaft 31 gebildet wird. Der Schraubenschaft 31 ist in eine Gewindebohrung 32 des Grundspannelementes 3 eingeschraubt, und zwar in dem der zweiten Aufnahmebohrung 4 gegenüberliegenden Ende des Grundspannelementes 3. Die Gewindebohrung 32 befindet sich in einem in einer Gewindebohrung 33 des Grundspannelementes 3 eingeschraubten Aufnahmeteil 34. Im Bereich eines gewindefreien Abschnittes 35 des Schraubenschaftes 31 ist eine Anzugsscheibe 36 zwischen dem Teller 30 und der diesem gegenüberliegenden Stirnfläche des Aufnahmeteiles angeordnet. Die Anzugsscheibe 36 weist eine mittige Öffnung 37 auf, deren Durchmesser größer ist als der Außendurchmesser des gewindefreien Abschnittes 35. Der Außendurchmesser der Anzugsscheibe ist größer als der Außendurchmesser des Tellers 30. An der dem Aufnahmeteil zugekehrten Seite weist die Anzugsscheibe 36 im Bereich ihrer Außenkante eine Anfasung 38 auf. Der Grundschaft 1 weist in Verlängerung seiner Aufnahmebohrung 2 koxial mit seiner Mittelachse einen Bohrungsabschnitt 39 auf, dessen Durchmesser kleiner ist als der der Aufnahmebohrung 2 und größer als der der Anzugsscheibe 36. In diesem Bohrungsabschnitt 39 endet eine radial durch die Wandung des Grundschaftes 1 verlaufende Gewindebohrung 40, in die ein Kegelbolzen 41 einschraubbar ist, der an seinem Einschraubende einen Kegelstumpf 42 besitzt. Die Neigung des Kegelstumpfes 42 korrespondiert mit der der Anfasung 38 der Anzugsscheibe 36. Innerhalb des Bohrungsabschnittes 39 ist weiterhin eine Ringnut 43 ausgebildet, wobei der Außendurchmesser der Ringnut größer ist als der Durchmesser des Bohrungsabschnittes 39. Die Breite der Ringnut 43 ist ≥ der Dicke der Anzugsscheibe 36. Die Funktion der Axial-Anzugsvorrichtung ist nun wie folgt :

Das Grundspannelement wird in Pfeilrichtung X (siehe Fig. 1) in den Grundschaft eingeschoben. Dabei ist die Tellerschraube 16 derart weit eingeschraubt, daß im eingeschobenen Zustand ihre dem Aufnahmeteil 34 zugekehrte Seite in Einschubrichtung hinter der Mittelachse des Kegelbolzens 41 liegt. Weiterhin ist die Tellerschraube derart ausgebildet, daß der Abstand der dem Aufnahmeteil zugekehrten Stirnseite von dem Aufnahmeteil größer ist als die Dicke der Anzugsscheibe 36. Die Konizität des Kegelstumpfes 42 und die entsprechende Ausbildung der Anfasung 38 der Anzugsscheibe 36 sind derart ausgebildet, daß unabhängig von der Lage der Anzugsscheibe auf dem gewindefreien Abschnitt sichergestellt ist, daß die Mittelachse des Kegelbolzens 41, in Einschubrichtung gesehen, vor der Schnittkante 44 der Anfasung 38 mit der Umfangsfläche der Anzugsscheibe 36 liegt. Weiterhin ist es erforderlich, daß die dem Aufnahmeteil 34 zugewandte Seite des Tellers 30, in Einschubrichtung gesehen, in jedem Fall hinter der Vorderkante 45 der Ringnut 43 liegt. Dabei ist weiterhin erfindungsgemäß die an der Vorderkante 45 beginnende Seitenwand 46 der Ringnut abgeschrägt, und zwar entsprechend der Anfasung 38. Durch die vorstehenden erfindungsgemäßen Merkmale wird nun erreicht, daß, sobald das Grundspannelement 3 eingeschoben ist, wobei der Kegelbolzen 41 nicht oder nur teilweise in die Gewindebohrung 40 eingeschraubt ist, nunmehr der Kegelbolzen eingeschraubt wird. Dabei kommt auf jeden Fall der Kegelstumpf 42 mit der Anfasung 38 in Eingriff, wodurch die Anzugsscheibe 36 gegen den Teller 30 verschoben wird und an diesem zur Anlage kommt. Durch weiteres Hineindrehen des Kegelbolzens erfolgt nun eine axiale Krafteinwirkung auf das Grundspannelement, so daß dieses axial in den Grundschaft 1 hineingezogen wird, bis es mit seinem Flansch 7 gegen die Stirnseite 8 des Grundschaftes anliegt. Gleichzeitig fällt die Anzugsscheibe 36 bei der Bewegung gegen den Teller 30 zumindest teilweise in die Ringnut 43, wodurch die axiale Spannkraft auf den Grundschaft praktisch am gesamten Umfang des Tellers 30 angreift. Da der Kegelbolzen mit seinem Kegelstumpf 42 auch eine radiale Kraft auf die Anzugsscheibe 36 überträgt, wird diese über die abgeschrägte Seitenwand 46 der Ringnut 43 und ihre Anfasung in die Ringnut hineingedrückt, wodurch auch eine Arretierung des Grundspannelementes erreicht wird. Zum Lösen wird der Kegelbolzen 41 herausgedreht und das Grundspannelement 3 kann entgegen der Pfeilrichtung X herausgezogen werden, wobei dann die Anfasung 38 an der abgeschrägten Seitenwand 46 gleitet, wobei die Anzugsscheibe 36 angehoben wird, bis sie außerhalb der Ringnut 43 liegt.

Wie sich aus dem Vorstehenden ergibt, zeichnet sich die Axial-Anzugsvorrichtung durch einen einfachen Aufbau aus und gewährleistet einen absolut festen Sitz des Grundspannelementes 3 im Grundschaft 1 unter Anlage der Teile gegeneinander.

Bei der ersten in Fig. 6 dargestellten Ausführungsform sind gleiche Teile wie in den Fig. 1 bis 5 mit denselben Bezugsziffern versehen. In Fig. 6 ist die Exzentereinrichtung zum justierbaren Ausgleich des Achsversatzes zwischen der Rotationsachse x-x des Spannelementes 6 und der Achse z-z des eingespannten Teiles erfindungsgemäß dadurch gebildet, daß innerhalb der Aufnahmebohrung 2 eine Exzenterbuchse 50 eingesetzt ist, deren Aufnahmebohrung 51 exzentrisch zur Rotationsachse x-x ist. An ihrem aus der Aufnahmebohrung 2 herausragenden Ende weist die Exzenterbuchse 50 einen umlaufenden Ringkragen 52 auf, mit dem sie gegen das gegenüberliegende Ende des Grundschaftes 1 anliegt. Innerhalb der Aufnahmebohrung 51 der Exzenterbuchse 50 wird das Grundspannelement 3 eingesetzt, dessen innere Aufnahmebohrung, d. h. die zweite Aufnahmebohrung 4 mit ihrer Mittelachse zur Mittelachse der Aufnahmebohrung 51 exzentrisch versetzt ist. Mittels der äußeren Spannbuchse 14 wird die Exzenterbuchse 50 in der Aufnahmebohrung 2 verspannt. Innerhalb des Ringkragens 52 ist radial zur Aufnahmebohrung ein Gewindestift 53 innerhalb einer Gewindebohrung 54 angeordnet, mit dem eine Fixierung der Exzenterbuchse auch auf dem Grundspannelement 3 vorgenommen werden kann.

In Fig. 7 ist eine zweite Ausführungsform der Erfindung dargestellt. Hierbei sind gleiche Teile wie in den Fig. 1 bis 6 mit denselben Bezugsziffern versehen. Bei dieser erfindungsgemäßen Ausführungsform besteht die Exzentereinrichtung aus zwei Exzenterbuchsen 56, 57. Die äußere Exzenterbuchse 56 weist eine Aufnahmebohrung 58 auf, deren Mittelachse exzentrisch zur Rotationsachse x-x verläuft. In dieser Aufnahmebohrung 58 sitzt die innere Exzenterbuchse 57, deren Aufnahmebohrung 59 derart ausgebildet ist, daß ihre Mittelachse exzentrisch zur Mittelachse der Bohrung 58 verläuft. Innerhalb der Aufnahmebohrung 59 der inneren Exzenterbuchse 57 ist das Grundspannelement 3 eingesetzt, dessen Aufnahmebohrung 4 zentrisch zum Außenumfang des Grundspannelementes 3 ist. An ihren aus der Aufnahmebohrung 2 herausragenden Enden weisen die Exzenterbuchsen 56, 57 jeweils Ringkragen 60, 61 auf, in denen wiederum radial verlaufende Gewindestifte 53 in Gewindebohrungen 54 derart angeordnet sind, daß mittels dieser Gewindestifte die Exzenterbuchse 56 auf der Exzenterbuchse 57 fixiert und die Exzenterbuchse 57 auf dem Grundspannelement 3 fixiert werden kann.

Der Vorteil der Ausführungsformen der Fig. 6 und 7 besteht darin, daß bei der Ausführungsform gemäß Fig. 6 der Grundschaft 1 mit einer zentrischen Aufnahmebohrung 2 versehen werden kann und bei der Ausführungsform gemäß Fig. 7 besteht zusätzlich der Vorteil, daß dort auch das Grundspannelement 3 mit einer zentrischen Aufnahmebohrung ausgestattet ist, wodurch die Fertigung dieser Teile vereinfacht wird. Darüber hinaus kann durch den Einsatz unterschiedlicher Exzenterbuchsen jede beliebige Exzentrizität ausgeglichen werden.

Das Spannelement nach der Erfindung erlaubt durch seinen relativ unkomplizierten Aufbau einen exakt justierbaren Ausgleich beim Achsversatz zwischen einer außermittigen Rotationsachse des Spannelementes und der Achse des eingespannten Teiles, wie vorgängig beschrieben. Dabei ist mit Hilfe der daran angebrachten Skala und Stellungsmarke eine vorgegebene Exzentrizität problemlos einstellbar. Infolgedessen erfüllt das Spannelement nach der Erfindung in idealer Weise die eingangs gestellte Aufgabe.

## Patentansprüche

1. Spannelement zum zentrischen Spannen rotierender Teile, wie Werkstücke oder Werkzeuge, mit einer Exzenter-Einrichtung zum justierbaren Ausgleich eines Achsversatzes zwischen einer Rotationsachse (x-x) des Spannelementes (6) und der Achse (z-z) des eingespannten Teiles (5), bestehend aus einem Grundschaft (1) mit einer zylindrischen Bohrung (2), in der ein Grundspannelement (3) mit einer Aufnahmebohrung (4) für das zu spannende Teil (5) angeordnet ist, wobei zur Ausbildung der Exzenter-Einrichtung jeweils die Mittelachse (m-m) des Grundschaftes (1) sowie die Mittelachse des Grundspannelementes (3) sowie die Mittelachse (z-z) der darin befindlichen Aufnahmebohrung (4) im Abstand zueinander parallel versetzt sind, dadurch gekennzeichnet, daß zum Spannen mit dem Grundspannelement (3) eine innere (17) und eine äußere (14) hydraulische Spannbuchse vorgesehen sind, und daß die Exzenter-Einrichtung aus einer in der zur Mittelachse (Rotationsachse) (x-x) des Grundschaftes (1) zentrischen Bohrung (2) des Grundschaftes (1) angeordneten Exzenterbuchse (50) besteht, deren Aufnahmebohrung (51) exzentrisch zur Rotationsachse ist, sowie aus dem in der Aufnahmebohrung (51) der Exzenterbuchse (50) eingesetzten Grundspannelement (3), dessen zylindrisch ausgebildete Aufnahmebohrung (4) mit ihrer Mittelachse exzentrisch zur Mittelachse der Aufnahmebohrung (51) der Exzenterbuchse (50) ausgebildet ist.

2. Spannelement zum zentrischen Spannen rotierender Teile, wie Werkstücke oder Werkzeuge, mit einer Exzenter-Einrichtung zum justierbaren Ausgleich eines Achsversatzes zwischen einer Rotationsachse (x-x) des Spannelementes (6) und der Achse (z-z) des eingespannten Teiles (5), bestehend aus einem Grundschaft (1) mit einer zylindrischen Bohrung (2), in der ein Grundspannelement (3) mit einer Aufnahmebohrung (4) für das zu spannende Teil (5) angeordnet ist, wobei zur Ausbildung der Exzenter-Einrichtung jeweils die Mittelachse (m-m) des Grundschaftes (1) und die Mittelachse des Grundspannelementes (3) bzw. die Mittelachse (z-z) der darin befindlichen Aufnahmebohrung (4) im Abstand zueinander parallel versetzt sind, dadurch gekennzeichnet, daß zum Spannen mit dem Grundspannelement (3) eine innere (17) und eine äußere (14) hydraulische Spannbuchse vorgesehen sind, daß die Exzenter-Einrichtung aus einer in der zur Mittelachse des Grundschaftes (1) zentrischen Bohrung (2) angeordneten, äußeren Exzenterbuchse (56) besteht, deren Aufnahmebohrung (58) mit ihrer Mittelachse exzentrisch zur Mittelachse der Grundschaft-Bohrung (2) verläuft, sowie aus einer in der Aufnahmebohrung (58) der äußeren Exzenterbuchse (56) geführten, inneren Exzenterbuchse (57), deren Aufnahmebohrung (59) mit ihrer Mittelachse exzentrisch zur Mittelachse der Aufnahmebohrung (58) der äußeren Exzenterbuchse (56) verläuft, und daß das Grundspannelement (3) in der Aufnahmebohrung (59) der inneren Exzenterbuchse (57) geführt ist und eine zu seinem Umfang zentrische, zylindrische Aufnahmebohrung (4) aufweist.

3. Spannelement nach Anspruch 1 oder 2, dadurch gekennzeichnet, daß an den aus der Grundschaft-Bohrung (2) herausragenden Enden der Exzenterbuchsen (50, 56, 57) Ringkragen (52) ausgebildet sind, in denen radiale Gewindebohrungen (54) ausgebildet sind, in denen ein Gewindestift (53) zum Fixieren der Exzenterbuchsen einschraubbar ist.

4. Spannelement nach den Ansprüchen 1 bis 3, dadurch gekennzeichnet, daß die Achspaare (m-m) ; (y-y) und (y-y) ; (z-z) jeweils um den gleichen Abstandsbetrag (Δ(m-y) ; Δ(y-z) parallel versetzt sind.

5. Spannelement nach mindestens einem der Ansprüche 1 bis 4, dadurch gekennzeichnet, daß der Abstand (Δ(m-y) ; Δ(y-z)) je zwei exzentrisch gegeneinander versetzter Achsen (m-m) — (y-y) ; und (y-y) — (z-z) zwischen 0,1 mm und 0,01 mm, vorzugsweise 0,05 mm beträgt.

6. Spannelement nach mindestens einem der Ansprüche 1 bis 5, dadurch gekennzeichnet, daß der Grundschaft (1) und das Grundspannelement (3) im entspannten Zustand relativ zueinander verdrehbar und in jeder sich hier ergebenden Stellung miteinander fixierbar ausgebildet sind.

7. Spannelement nach mindestens einem der Ansprüche 1 bis 5, dadurch gekennzeichnet, daß das Grundspannelement (3) mit einem radialen Flansch (7) an einer Stirnseite (8) des Grundschaftes (1) anliegt und gegenüber diesem mit einer Verdrehsicherung, vorzugsweise in Form eines in Arretierbohrungen (22) einrastbaren bzw. eingepaßten Arretierungsstiftes (21) ausgebildet ist.

8. Spannelement nach mindestens einem der Ansprüche 1 bis 7, dadurch gekennzeichnet, daß ein der Stirnseite (8) zunächst gelegener Zylindermantelbereich (11) des Grundschaftes (1) mit einer Skala (12) in einer Grad-Einteilung, vorzugsweise in einer 15- oder 30-Grad-Einteilung, ausgebildet ist.

9. Spannelement nach mindestens einem der Ansprüche 1 bis 8, dadurch gekennzeichnet, daß die innere (17) und die äußere (14) Spannbuchse am Grundspannelement (3) ausgebildet sind und zwei getrennt wirkende, jeder Spannbuchse (14, 17) zugeordnete Hydrauliksysteme (24, 27) vorgesehen sind.

10. Spannelement nach mindestens einem der Ansprüche 1 bis 9, dadurch gekennzeichnet, daß an dem der Aufnahmebohrung (4) des Grundspannelementes (3) gegenüberliegenden Ende an diesem eine Axial-Anzugsvorrichtung ausgebildet ist, die in einen Bohrungsabschnitt (39) des Grundschaftes (1) hineinragt und mit einem radial in den Bohrungsabschnit (39) hineinschraubbaren Bolzen (41) zusammenwirkt.

11. Spannelement nach Anspruch 10, dadurch gekennzeichnet, daß die Axial-Anzugsvorrichtung aus einer Tellerschraube (16) mit einem als Kopf ausgebildeten Teller (30) und einem Schraubenschaft (31) besteht, wobei der Schraubenschaft einen gewindefreien Abschnit (35) aufweist, auf dem eine Anzugsscheibe (36) gelagert ist und der Öffnungsdurchmesser der mittigen Öffnung der Anzugsscheibe (36) größer ist als der Durchmesser des Schraubenschaftes (31).

12. Spannelement nach Anspruch 10 oder 11, dadurch gekennzeichnet, daß die Anzugsscheibe (36) an ihrer dem Grundspannelement (3) zugekehrten Seite eine umlaufende Anfasung (38) aufweist, die mit einem Kegelstumpf (42) des Kegelbolzens (41) zusammenwirkt.

13. Spannelement nach einem oder mehreren der Ansprüche 10 bis 12, dadurch gekennzeichnet, daß innerhalb des Bohrungsabschnittes (39) eine Ringnut (43) ausgebildet ist, deren Nutdurchmesser größer ist als der Durchmesser des Bohrungsabschnittes (39).

14. Spannelement nach Anspruch 13, dadurch gekennzeichnet, daß die Breite der Ringnut (41) ≥ der Dicke der Anzugsscheibe (36) ist.

15. Spannelement nach Anspruch 13 oder 14, dadurch gekennzeichnet, daß die in Einschubrichtung (x) vordere Seitenwand (46) der Ringnut (43) entsprechend dem Verlauf der Anfasung (38) abgeschrägt ist.

**Claims**

1. Gripping element for centered gripping of rotating parts, such as workpieces or tools, having an eccentric apparatus for the adjustable compensation of an axis offset between an axis (x-x) of rotation of the gripping element (6) and the axis (z-z) of the gripped part (5), comprising a main shaft (1) having a cylindrical bore (2), in which a main gripping element (3) having a receiving bore (4) for the part (5) to be gripped is arranged, whereby, to form the eccentric apparatus, the respective central axis (m-m) of the main shaft (1) and the central axis of the main gripping element (3) and the central axis (z-z) of the receiving bore (4) located therein are offset in spaced parallel relationship, characterised in that, for gripping by means of the main gripping element (3), an inner (17) and an outer (14) hydraulic gripping sleeve are provided, and in that the eccentric apparatus comprises an eccentric sleeve (50) arranged in the bore (2) of the main shaft (1) centrally with respect to the central axis (axis of rotation (x-x)) of the main shaft (1), the receiving bore (51) of this eccentric sleeve (50) being eccentric to the axis of rotation, and also comprises the main gripping element (3) which is inserted in the receiving bore (51) of the eccentric sleeve (50) and whereof the cylindrically constructed receiving bore (4) is constructed with its central axis eccentric with respect to the central axis of the receiving bore (51) of the eccentric sleeve (50).

2. Gripping element for centered gripping of rotating parts, such as workpieces or tools, having an eccentric apparatus for the ajustable compensation of an axis offset between an axis (x-x) of rotation of the gripping element (6) and the axis (z-z) of the gripped part (5), comprising a main shaft (1) having a cylindrical bore (2), in which a main gripping element (3) having a receiving bore (4) for the part (5) to be gripped is arranged, whereby, to form the eccentric apparatus, the respective central axias (m-m) of the main shaft (1) and the central axis of the main gripping element (3) or the central axis (z-z) of the receiving bore (4) located therein are offset in spaced parallel relationship, characterised in that, for gripping by means of the main gripping element (3), an inner (17) and an outer (14) hydraulic gripping sleeve are provided, in that the eccentric apparatus comprises an outer eccentric sleeve (56) arranged in the bore (2) centrally with respect to the central axis of the main shaft (1), and the receiving bore (58) of this outer eccentric sleeve (56) extends with its central axis eccentrically to the central axis of the main shaft bore (2), and also comprises an inner eccentric sleeve (57) which is guided in the receiving bore (58) of the outer eccentric sleeve (56) and whereof the receiving bore (59) extends with its central axis eccentrically to the central axis of the receiving bore (58) of the outer eccentric sleeve (56), and in that the main gripping element (3) is guided in the receiving bore (59) of the inner eccentric sleeve (57) and has a cylindrical receiving bore (4) central to its periphery.

3. Gripping element according to Claim 1 or 2, characterised in that annular collars (52) are constructed at the ends of the eccentric sleeves (50, 56, 57) projecting out of the main shaft bore (2), in which annular collars (52) there are constructed radial threaded bores (54) in which a set screw (53) can be screwed to fix the eccentric sleeves.

4. Gripping element according to Claims 1 to 3, characterised in that the pairs of axes (m-m) ; (y-y) and (y-y) ; (z-z) are each offset parallel by the same spacing (Δ(m-y) ; Δ(y-z)).

5. Gripping element according to at least one of Claims 1 to 4, characterised in that the spacing (Δ(m-y) ; Δ(y-z)) of each two axes (m-m)-(y-y) ; and (y-y)-(z-z) offset eccentrically with respect to one another is between 0.1 mm and 0.01 mm, preferably 0.05 mm.

6. Gripping element according to at least one of Claims 1 to 5, characterised in that the main shaft (1) and the main gripping element (3) are rotatable relative to one another in the ungripped state and are constructed to be fixable to one another in any position resulting herefrom.

7. Gripping element according to at least one of Claims 1 to 5, characterised in that the main gripping element (3) lies with a radial flange (7) against an end face (8) of the main shaft (1) and is constructed opposite this with a protection against rotation, preferably in the form of a stop pin (21), which is fitted or which can be latched into stop bores (22).

8. Gripping element according to at least one of Claims 1 to 7, characterised in that a cylinder casing area (11) of the main shaft (1), adjacent to the end face (8), is constructed having a scale (12) with a degree graduation, preferably a 15 or 30 degree graduation.

9. Gripping element according to at least one of Claims 1 to 8, characterised in that the inner (17) and the outer (14) gripping sleeve are constructed on the main gripping element (3) and two separately operating hydraulic systems (24, 27) associated with each gripping sleeve (14, 17) are provided.

10. Gripping element according to at least one of Claims 1 to 9, characterised in that at the end opposite the receiving bore (4) of the main gripping element (3) an axial retaining apparatus is constructed thereon which projects into a bore section (39) of the main shaft (1) and cooperates with a pin (41) which can be screwed radially into the bore section (39).

11. Gripping element according to Claim 10, characterised in that the axial retaining apparatus comprises a disc washer (16) having a disc (30), constructed as a head, and a screw shaft (31), whereby the screw shaft has a threadless section (35) on which there is mounted a retaining disc (36) and the opening diameter of the central opening of the retaining disc (36) is larger than the diameter of the screw shaft (31).

12. Gripping element according to Claim 10 or 11, characterised in that the retaining disc (36) has on its side facing the main gripping element (3) a rotary chamfering (38) which cooperates with a truncated cone (42) of the conical pin (41).

13. Gripping element according to one or more of Claims 10 to 12, characterised in that, within the bore section (39), there is constructed an annular groove (43) whereof the groove diameter is greater than the diameter of the bore section (39).

14. Gripping element according to Claim 13, characterised in that the width of the annular groove (41) ≥ the thickness of the retaining disc (36).

15. Gripping element according to Claim 13 or 14, characterised in that the front side wall (46) (in the insertion direction (x)) of the annular groove (43) is chamfered in accordance with the profile of the chamfering (38).

**Revendications**

1. Mandrin pour le montage centré de pièces en rotation, telles que des pièces à usiner ou des outils, présentant un dispositif d'excentrique pour la compensation ajustable d'un déport axial entre un axe de rotation (x-x) du mandrin (6) et l'axe (z-z) de la pièce montée (5) consistant en une tige de base (1) munie d'un alésage cylindrique (2) dans lequel est disposé un mandrin de base (3) muni d'un alésage (4) recevant la pièce (5) à monter, dans lequel, pour réaliser le dispositif d'excentrique, l'axe central (m-m) respectif de la tige de base (1), ainsi que l'axe central du mandrin de base (3) et l'axe central (z-z) de l'alésage d'accueil (4) qui y est disposé, sont déportés parallèlement les uns par rapport aux autres, caractérisé en ce que des douilles hydrauliques de serrage intérieure (17) et extérieure (14) sont prévues pour le serrage à l'aide du mandrin et que le dispositif d'excentrique consiste, d'une part, en une douille d'excentrique (50) disposée dans l'alésage (2) centré par rapport à l'axe central (axe de rotation) (x-x) de la tige de base (1), l'alésage d'accueil (51) de cette douille étant excentrique par rapport à l'axe de rotation, et d'autre part, le mandrin de base (3) disposé dans l'alésage d'accueil (51) de la douille d'excentrique (50), mandrin dont l'axe central de l'alésage d'accueil (4) cylindrique est excentrique par rapport à l'axe central de l'alésage d'accueil (51) de la douille d'excentrique (50).

2. Mandrin pour le montage centré de pièces en rotation, telles que des pièces à usiner ou des outils, possédant un dispositif d'excentrique pour la compensation ajustable d'un déport axial entre un axe de rotation (x-x) du mandrin (6) et l'axe (z-z) de la pièce montée (5), comprenant une tige de base (1) munie d'un alésage central (2) dans lequel est disposé un mandrin de base (3) muni d'un alésage (4) pour recevoir la pièce à serrer (5), dans lequel pour réaliser le dispositif d'excentrique, l'axe central (m-m) respectif de la tige de base (1), ainsi que l'axe central du mandrin de base (3) ou l'axe central (z-z) d'alésage d'accueil qui y est disposé, sont déportés parallèlement les uns par rapport aux autres, caractérisé en ce que, pour le serrage avec le mandrin de base (3), il est prévu une douille de serrage intérieure (17) et extérieure (14), en ce que le dispositif d'excentrique consiste, d'une part en une douille d'excentrique extérieure (56) disposée dans un alésage (2) centré par rapport à l'axe central de la tige de base (1) dont l'axe central de l'alésage d'accueil (58) s'étend excentriquement à l'axe central de l'alésage (2) de la tige de base, et d'autre part, en une douille d'excentrique intérieure (57) guidée dans l'alésage d'accueil (58) de la douille d'excentrique extérieure (56), douille intérieure dont l'axe central de l'alésage d'accueil (59) s'étend excentriquement par rapport à l'axe central de l'alésage d'accueil (58) de la douille d'excentrique extérieure, et en ce que le mandrin de base (3) est guidé dans l'alésage d'accueil (59) de la douille d'excentrique intérieure (57) et présente un alésage d'accueil (4) cylindrique centré par rapport à la circonférence dudit mandrin.

3. Mandrin selon la revendication 1 ou 2, caractérisé en ce que, sur les extrémités faisant saillie de l'alésage (2) de la tige centrale des douilles d'excentrique (50, 56, 57) sont formées des collerettes annulaires (52) dans lesquelles sont réalisés des alésages filetés radiaux (54) dans lesquels une cheville filetée (53) peut être vissée pour la fixation des douilles d'excentrique.

4. Mandrin selon les revendications 1-3, caractérisé en ce que les couples d'axes (m-m) ; (y-y) et (y-y) ; (z-z) sont respectivement déportés parallèlement de la même valeur (Δ(m-y) ; Δ(y-z)).

5. Mandrin selon au moins l'une des revendications 1 à 4, caractérisé en ce que la distance (Δ(m-y) ; Δ(y-z)) de deux axes (m-m) — (y-y) et (y-y) — (z-z) respectivement déportés excentriquement l'un par rapport à l'autre est située entre 0,1 et 0,01 mm, et est de préférence de 0,05 mm.

6. Mandrin selon au moins une des revendications 1 à 5 caractérisé en ce que, dans leur état détendu, la tige de base (1) et le mandrin de base (3) peuvent être tordus l'un par rapport à l'autre et fixés l'un à l'autre dans chacune des positions ainsi données.

7. Mandrin selon au moins une des revendications 1 à 5, caractérisé en ce que le mandrin de base (3) est appliqué par une bride radiale (7) sur une face d'attaque (8) de la tige de base (1) et possède, par rapport à cette tige, une sécurité de torsion, de préférence sous la forme d'une cheville d'arrêt (21) encliquetable ou ajustée dans des alésages d'arrêt (22).

8. Mandrin selon l'une au moins des revendications 1 à 7, caractérisé en ce qu'une région (11) de l'enveloppe cylindrique de la tige de base (1) disposée au voisinage de la face d'attaque (8), possède une échelle de graduation (12), de préférence par 15 ou 30 degrés.

9. Mandrin selon l'une au moins des revendications 1 à 8, caractérisé en ce que les douilles de serrage intérieure (17) et extérieure (14) sont formées sur le mandrin de base (3) et qu'il est prévu deux systèmes hydrauliques (24, 27) agissant séparément et associés à chacune des douilles de serrage (14, 17).

10. Mandrin selon l'une au moins des revendications 1 à 9, caractérisé en ce que, sur l'extrémité du mandrin de base (3) située en regard de l'alésage d'accueil (4), est réalisé un moyen de serrage axial qui fait saillie dans une section d'alésage (39) de la tige de base (1) et coopère avec un boulon (41) pouvant être vissé radialement dans la section d'alésage (39).

11. Mandrin selon la revendication 10, caractérisé en ce que le moyen de serrage axial consiste en une vis (16) possédant une tête en forme de disque (30) et une tige (31), la tige possédant une section (35) sans filet sur laquelle repose le disque de serrage (36), et en ce que le diamètre de l'ouverture centrale du disque de serrage (36) est supérieure au diamètre de la tige (31) de la vis.

12. Mandrin selon la revendication 10 ou 11, caractérisé en ce que le disque de serrage (36) possède sur son côté en regard du mandrin de base (3) un biseautage circulaire (38) qui coopère avec un tronc (42) du boulon conique (41).

13. Mandrin selon l'une ou plusieurs des revendications 10 à 12, caractérisé en ce qu'à l'intérieur de la section d'alésage (39), il est réalisé une rainure annulaire (43) dont le diamètre est supérieur au diamètre de la section d'alésage (39).

14. Mandrin selon la revendication 13, caractérisé en ce que la largeur de la rainure annulaire (41) est supérieure ou égale à l'épaisseur du disque de serrage (36).

15. Mandrin selon la revendication 13 ou 14, caractérisé en ce que la paroi latérale (46), frontale selon la direction d'introduction (x), de la rainure annulaire (43) est biseautée pour correspondre à la direction du biseautage (38).

FIG.1

FIG.2

FIG.3

# FIG.4

FIG.5

# FIG.5a

# FIG.5b

# FIG.5c

# FIG.5d

Fig 6

EP 0 164 582 B1

Fig.7